# EUROPÄISCHE PATENTSCHRIFT

(11) **EP 2 502 342 B1**
(45) Veröffentlichungstag und Bekanntmachung des Hinweises auf die Patenterteilung: **24.10.2018**
(21) Anmeldenummer: 10805408.1
(22) Anmeldetag: 18.11.2010
(51) Int. Cl.: H02P 27/10, H02P 8/12

(54) **VERFAHREN UND SCHALTUNGSANORDNUNG ZUR STROMREGELUNG BEI MOTOREN**
METHOD AND CIRCUIT ARRANGEMENT FOR CONTROLLING CURRENT IN MOTORS
PROCÉDÉ ET CIRCUIT DE RÉGULATION DE COURANT POUR DES MOTEURS

(30) Priorität: 18.11.2009 DE 102009053564
(43) Veröffentlichungstag der Anmeldung: 26.09.2012
(73) Patentinhaber: TRINAMIC Motion Control GmbH & Co. KG, 22769 Hamburg (DE)
(72) Erfinder: DWERSTEG, Bernhard, 25462 Rellingen (DE)
(74) Vertreter: Heun, Thomas
(86) Internationale Anmeldenummer: PCT/DE2010/075140
(87) Internationale Veröffentlichungsnummer: WO 2011/060783

(56) Entgegenhaltungen:
- DE-U1- 20 305 771
- JP-A- 61 224 899
- AJAY TRIPATHI ET AL: "COMPARATIVE ANALYSIS OF FIXED AND SINUSOIDAL BAND HYSTERESIS CURRENT CONTROLLERS FOR VOLTAGE SOURCE INVERTERS", IEEE TRANSACTIONS ON INDUSTRIAL ELECTRONICS, IEEE SERVICE CENTER, PISCATAWAY, NJ, USA, Bd. 39, Nr. 1, 1. Februar 1992 (1992-02-01), Seiten 63-73, XP000292464, ISSN: 0278-0046, DOI: DOI:10.1109/41.121913
- BOSE B K: "An Adaptive Hysteresis-Band Current Control Technique of a Voltage-Fed Pwm Inverter for Machine Drive System", 19881024; 19881024 - 19881028, Bd. 3, 24. Oktober 1988 (1988-10-24), Seiten 684-690, XP010271152,

## Beschreibung

Die Erfindung betrifft ein Verfahren und eine Schaltungsanordnung zur Regelung des Motorstroms bei einem elektrischen Motor, insbesondere einem Schrittmotor, mittels eines Chopper-Verfahrens.

Es ist bekannt, mittels Chopper-Verfahren aus einer zugeführten Motor-Versorgungsspannung für jede Motorspule eines Schrittmotors die in jede Spule entsprechend einer Stromvorgabe (Soll-Spulenstrom) jeweils einzuprägende Stromrichtung, Stromhöhe und Stromform (im Mikroschrittbetrieb üblicherweise eine sinus- bzw. cos-Form) mittels PWM-Pulsen zu erzeugen, um damit den Rotor des Motors anzutreiben.

Dabei werden drei verschiedene Spulenstromphasen unterschieden, die durch das Chopper-Verfahren aktiviert werden:
In der ON-Phase wird der Spulenstrom in einer Spule jeweils in der momentan vorgegebenen Polarität bzw. Richtung des Spulenstroms aktiv durch die Spule getrieben, so dass der Spulenstrombetrag relativ schnell und kontinuierlich ansteigt (Einschaltperiode). Die durch eine ON-Phase eingeprägte Spulenstromrichtung ist also gleich der momentanen Polarität bzw. Richtung des Spulenstroms.

Die Polarität des Spulenstromes ist dabei im Falle eines sinusförmigen Spulenstromes z.B. positiv im ersten und zweiten Quadranten und negativ im dritten und vierten Quadranten.

In der Fast-Decay-(FD-) Phase wird der Spulenstrom entgegen der gerade vorgegebenen Polarität des Spulenstroms durch Umpolen der Spule und Rückspeisung des Spulenstroms in die Stromversorgung abgebaut. Die FD-Phase dient dazu, den Spulenstrom insbesondere in der Phase fallenden Spulenstrombetrages (d.h. während des zweiten und vierten Quadranten eines sinusförmigen Spulenstroms) relativ schnell abzubauen und zu verhindern, dass die Stromvorgabe zum Beispiel durch die Gegen-EMK verfälscht wird.

Als dritte Phase des Chopper-Betriebes ist die Rezirkulationsphase oder Slow-Decay-(SD-) Phase zu nennen, in der die Spule nicht aktiv angesteuert sondern kurzgeschlossen bzw. gebrückt wird, so dass der Spulenstroms aufgrund des Innenwiderstandes der Spule und der Gegen-EMK nur allmählich (d.h. langsamer als während der FD-Phasen) betragsmäßig abfällt.

Diese drei Chopper-Phasen werden also durch den Chopper mit Hilfe von einer Motor-Treiberschaltung zugeführten Chopper-Schaltsignalen (üblicherweise PWM-Signale) zeitlich so aktiviert, bemessen und kombiniert, dass der tatsächliche Spulenstrom über seinen gesamten (z.B. sinusförmigen) Verlauf, also während der steigenden und der fallenden Stromphasen, möglichst zeitnah und genau einer Stromvorgabe (Soll-Spulenstrom) folgt und insbesondere durch die durch den Rotor in den Motorspulen gegeninduzierte Spannung (Gegen-EMK) möglichst nicht verändert wird. Dazu ist es erforderlich, den tatsächlichen Spulenstrom in geeigneter Weise zu messen oder zu bestimmen.

Aufgrund der mit einer solchen Messung oder Bestimmung verbundenen Ungenauigkeiten sowie aufgrund der üblichen Streuungen sowohl der elektrischen Bauteileeigenschaften der Motor-Treiberschaltungen als auch des Innenwiderstandes und der Induktivität der Motorspulen unterscheidet sich der tatsächliche Verlauf des Spulenstroms jedoch stets zumindest geringfügig von dem vorgegebenen Sollverlauf des Spulenstroms. Andere Gründe hierfür liegen ferner in der aufgrund praktischer Kompromisse mehr oder weniger ungenauen Erfassung der Spulenstrom-Messwerte, die beispielsweise bei Brücken-Fußpunktmessung nur während der ON- und FD-Phasen möglich ist. Insbesondere aber das verwendete Chopperprinzip, das heißt, die Art, in der aufgrund der Messwerte die ON-, FD- und SD-Phasen gesteuert werden, führt immer zu einer gewissen Abweichung des tatsächlichen Spulenstromverlaufs von dem Sollverlauf des Spulenstroms. Dies ist schon allein durch die diskrete, aus praktischen und physikalischen Gründen begrenzte Arbeits- und damit auch Chopperfrequenz begründet. Es hat sich gezeigt, dass solche Abweichungen insbesondere im Bereich des Nulldurchgangs des tatsächlichen Spulenstroms nachteilige Effekte hervorrufen können, indem der Motor z.B. ein höheres Laufgeräusch sowie Resonanzen und schlechtere Positionierungseigenschaften zeigt.

In dem Artikel "Comparative Analysis of Fixed and Sinusoidal Band Hysteresis Current Controllers for Voltage Source Inverters" von Ajay Tripathi et al., in IEEE Transactions on Industrial Electronics Bd. 39, Nr. 1, Februar 1992, Seiten 63-73, wird die Simulation verschiedener Strom-Steuereinheiten für Ein- und Dreiphasensysteme beschrieben, wobei um einen sinusförmigen Referenzstrom ein festes bzw. ein variables Hystereseband, mit und ohne Begrenzung der Schaltfrequenzen, gelegt wird. Die Simulationsergebnisse werden im Hinblick auf verschiedene Parameter wie Stromspitzen, Stromformen, Frequenzspektren sowie mittlere und maximale Schaltfrequenzen miteinander verglichen.

In der DE 203 05 771 U1 wird eine Schaltungsanordnung zum Betreiben von Schrittmotoren mittels einer Kombination verschiedener Chopper-Phasen beschrieben. Diese Druckschrift offenbart insbesondere eine Mixed-Decay-Betriebsart, die sich aus einem ersten und einem nachfolgenden zweiten Zeitintervall zusammensetzt, wobei innerhalb des ersten Zeitintervalls eine FD (Fast-Decay) -Phase zwischen dem Ende einer vorangehenden ON-Phase und dem Ende dieses ersten Zeitintervall aktivierbar ist, und wobei innerhalb des zweiten Zeitintervalls eine SD (Slow-Decay) -Phase aktiviert werden kann. Dies hat den Vorteil, dass die zeitliche Dauer der ON-Phase automatisch und in umgekehrt proportionaler Weise in die Dauer der FD-Phase eingeht, da letztere am Ende des ersten Zeitintervalls endet, so dass eine adaptive Anpassung der Dauer der FD-Phase erreicht und damit der Motor auch während des Mixed-Decay-Betriebes besonders Geräusch- und Resonanzarm und mit geringer Verlustleistung betrieben werden kann.

Eine Aufgabe, die der Erfindung zugrunde liegt, besteht darin, ein Verfahren und eine Schaltungsanordnung zur Regelung des Motorstroms bei einem elektrischen Motor, insbesondere einem Schrittmotor, mittels eines Chopper-Verfahrens zu schaffen, mit dem/der der tatsächliche Verlauf eines Spulenstroms insbesondere im Bereich von dessen Nulldurchgang noch wesentlich genauer und zumindest in dem Maße einem vorgegebenen Soll-Spulenstromverlauf angepasst werden kann, dass die oben genannten nachteiligen Effekte nicht mehr spürbar auftreten bzw. für eine konkrete Anwendung vernachlässigbar sind.

Gelöst wird diese Aufgabe mit einem Verfahren nach Anspruch 1 und einer Schaltungsanordnung nach Anspruch 11.

Das erfindungsgemäße Prinzip ist sowohl für 2-Phasen-Schrittmotoren, also auch für 3- und Mehrphasen-Schrittmotoren anwendbar.

Die Unteransprüche haben vorteilhafte Weiterbildungen der Erfindung zum Inhalt.

Weitere Einzelheiten, Merkmale und Vorteile der Erfindung ergeben sich aus der folgenden Beschreibung von bevorzugten, beispielhaften Ausführungsformen anhand der Zeichnung. Es zeigt:
- Fig. 1: Schaltbilder mit verschiedenen Stromrichtungen in einer Motorspule während des Chopperbetriebes;
- Fig. 2: verschiedene Abweichungen eines tatsächlichen Spulenstroms von einem vorgegebenen Soll-Spulenstrom während einer vollen Stromperiode;
- Fig. 3: ein erstes Diagramm eines Teils des Verlaufes eines tatsächlichen Spulenstroms bei einem Chopper-Verfahren mit konstanter Hysterese;
- Fig. 4: ein zweites Diagramm eines Teils des Verlaufes eines tatsächlichen Spulenstroms bei einem Chopper-Verfahren mit konstanter Hysterese im Bereich eines Nulldurchgangs des Soll-Spulenstroms;
- Fig. 5: ein drittes Diagramm eines Teils des Verlaufes eines tatsächlichen Spulenstroms bei einem Chopper-Verfahren mit variabler Hysterese;
- Fig.6: eine Darstellung eines tatsächlichen und eines vorgegebenen (Soll-) SpulenStromverlaufes über eine gesamte Stromperiode bei Anwendung des erfindungsgemäßen Verfahrens; und
- Fig. 7: ein Prinzipschaltbild einer Schrittmotor-Ansteuereinheit mit den zur Durchführung des erfindungsgemäßen Verfahrens wesentlichen Komponenten für eine der Spulen eines Schrittmotors.

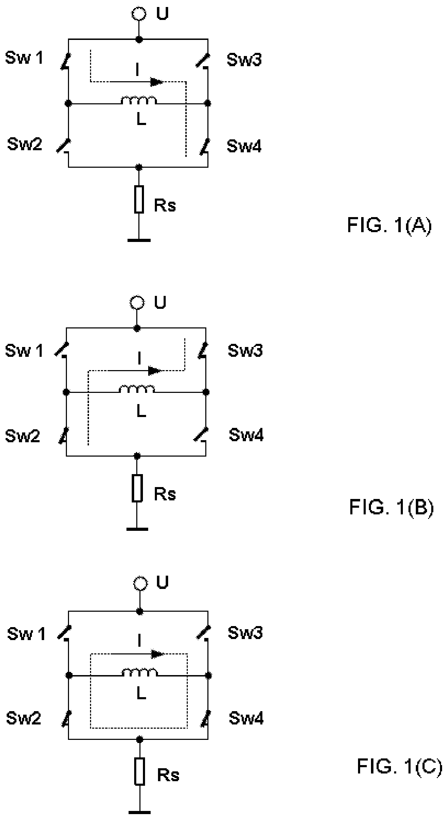

Zunächst sollen die drei eingangs genannten Spulenstrom- oder Chopper-Phasen sowie die Probleme, die sich im Zusammenhang mit diesen Phasen gezeigt haben, näher erläutert werden. Die drei Phasen sind schematisch in Figur 1(A), Figur 1(B) bzw. Figur 1(C) angedeutet. Diese drei Figuren zeigen jeweils eine Brückenschaltung aus einem ersten bis vierten Schalter Sw1, Sw2, Sw3, Sw4, wobei ein erster und ein zweiter Schalter Sw1, Sw2 sowie ein dritter und ein vierter Schalter Sw3, Sw4 jeweils in Reihe geschaltet und die beiden Reihenschaltungen parallel miteinander verbunden sind. Die Motorspule L ist mit den Mittelpunkten der Brückenzweige verbunden. Der Fußpunkt der Brückenschaltung ist typischerweise über einen Messwiderstand Rs mit Masse verbunden, während der Kopf der Brückenschaltung an eine Spannungs- bzw. Stromversorgung U der Treiberschaltung angeschlossen ist.

Figur 1(A) zeigt die Schalterstellungen und die daraus resultierende Richtung des Stromflusses I durch die Spule L während der oben genannten ersten oder ON-Phase, in der diese Richtung die gleiche ist wie die vorgegebene Richtung bzw. Polarität des Spulenstroms, wobei der erste und der vierte Schalter Sw1, Sw4 geschlossen und der zweite und der dritte Schalter Sw2, Sw3 geöffnet sind.

Figur 1(B) zeigt die Schalterstellungen und die daraus resultierende Umpolung der Spule L sowie die Rückspeisung des Spulenstroms I in die Spannungsversorgung U, d.h. entgegen der Richtung der Stromvorgabe bzw. der Polarität des Spulenstroms während der oben genannten zweiten oder Fast-Decay-Phase, in der der erste und der vierte Schalter Sw1, Sw4 geöffnet und der zweite und der dritte Schalter Sw2, Sw3 geschlossen sind.

Schließlich zeigt Figur 1(C) die dritte oder Slow-Decay-Phase (SD-Phase), bei der die Spule L kurzgeschlossen oder gebrückt ist, d.h. der zweite und der vierte Schalter Sw2, Sw4 sind geschlossen, während der erste und der dritte Schalter Sw1, Sw3 geöffnet sind (oder entsprechend umgekehrt), so dass sich der in der Spule L fließende Strom I entsprechend dem Innenwiderstand der Spule L allmählich abbaut, d.h. rezirkuliert.

Der Einfachheit halber wird für die folgenden Betrachtungen eine sinusförmige Strom-Ansteuerung der Spulen angenommen, d.h. bei einem 2-Phasen-Motor bzw. -Schrittmotor wird eine der Spulen mit einem sinusförmigen Stromverlauf und die andere Spule mit einem cosinusförmigen Stromverlauf bestromt. Die Betrachtungen gelten jedoch bei nicht-sinusförmiger Ansteuerung und/oder 3- oder Mehrphasen-Schrittmotoren, bei denen die ansteuernden Ströme eine andere Phasenverschiebung (zum Beispiel 120°) zueinander aufweisen, entsprechend.

Ferner werden für die folgenden Betrachtungen Phasen steigenden Spulenstrombetrages (d.h. während des ersten und dritten Quadranten des sinusförmigen Spulenstroms) und Phasen fallenden Spulenstrombetrages (d.h. während des zweiten und vierten Quadranten des sinusförmigen Spulenstroms) in den Spulen L unterschieden. Jede dieser Stromphasen wird durch das Chopper-Verfahren in eine geeignete Anzahl von ON-, FD- und ggf. SD-Phasen so unterteilt und realisiert, dass der Spulenstrom der sinusförmigen Stromvorgabe möglichst genau folgt.

Es sind verschiedene Algorithmen bekannt, mit denen in dem Chopper-Verfahren die zeitlichen Dauern dieser drei Chopper-Phasen und deren Abfolge eingestellt werden können.

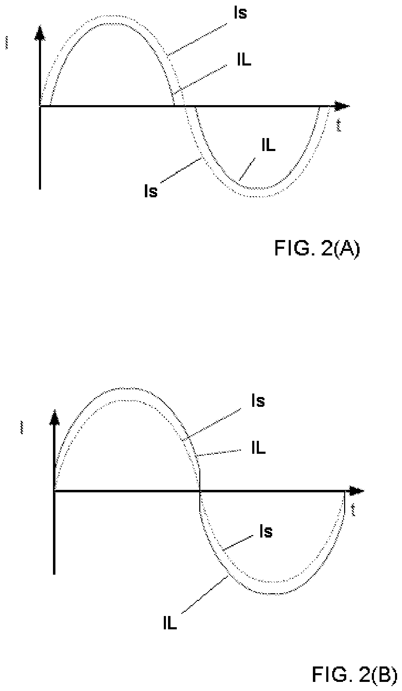

Während die ON-Phasen im Allgemeinen dann beendet werden, wenn ein momentaner tatsächlicher Betrag des Spulenstroms einen momentanen Sollwert des Spulenstrombetrages erreicht hat, werden die FD-Phasen oftmals ungeregelt nach Ablauf einer bestimmten Zeitdauer mit dem Ziel beendet, in der jeweiligen FD-Phase den in der Applikation aufgrund von Erfahrungswerten maximal notwendigen Abbau des Spulenstroms zu gewährleisten, ohne diesen tatsächlich zu messen. Dieses Verfahren führt oftmals zu einem Absinken des tatsächlichen Spulenstrombetrages unter den Soll-Spulenstrombetrag, so dass sich ein für den Motor ungünstiger Stromverlauf wie z.B. in Figur 2(A) gezeigt ergibt. Dieser ungünstige Spulenstromverlauf kann zwar durch einen Offset auf dem Soll-Spulenstrom in gewissen Grenzen kompensiert werden. Dies gelingt jedoch oftmals nicht genau genug, da die Kompensation nicht von Fall zu Fall eingemessen oder nachgeregelt wird. Sie müsste optimalerweise beispielsweise an die Geschwindigkeit, die Versorungsspannung und die Temperatur des Motors angepasst werden. Trotzdem weicht auch mit einer solchen Kompensation der tatsächliche Spulenstromverlauf IL oftmals von dem Soll-Spulenstromverlauf Is ab.

Dieser Fehler wirkt sich bei aufeinanderfolgenden positiven und negativen Sinus-Halbwellen des Spulenstroms insbesondere im Bereich von dessen Nullduchgang nachteilig aus, wie es zum Beispiel in Figur 2(A) und 2(B) dargestellt ist.

Wenn nämlich der oben erläuterte Fehler, der durch nicht angepasste FD-Phasen verursacht wird, nicht berücksichtigt wird, so tritt der in Figur 2(A) gezeigte Fall ein, in dem der Betrag des tatsächlichen Spulenstroms IL im Mittel um einen gewissen Wert unter den vorgegebenen Betrag des Soll-Spulenstroms Is absinkt, so dass sich bei einer Folge von positiven und negativen Halbwellen des Spulenstroms eine Abflachung oder, wie in Figur 2(A) gezeigt, ein längeres Verweilen im Bereich des Nulldurchgangs des Spulenstroms ergibt.

Wenn hingegen der o.g. Fehler der FD-Phasen mittels eines Offsets in der Ansteuerschwelle überkompensiert wird, zeigt sich der in Figur 2(B) dargestellte umgekehrte Fall, in dem in jeder Halbwelle des tatsächlichen Spulenstroms IL dieser nicht vollständig abgebaut wird, so dass sich bei einer Folge von positiven und negativen Halbwellen im Bereich des Nulldurchgangs ein Sprung zwischen den Halbwellen ergibt.

Um einen Vergleich zwischen einem momentanen tatsächlichen Spulenstrombetrag und einem momentanen Sollwert des Spulenstrombetrages durchführen zu können, wird der momentane tatsächliche Spulenstrom üblicherweise mit einem Messwiderstand Rs (siehe Figur 1) im Fußpunkt der Brückenschaltung, über die der Spulenstrom durch die betreffende Spule geleitet wird, gemessen (wobei die Strommessung auch auf andere Weise, zum Beispiel digital mit einem A/D-Wandler, erfolgen kann) und dann in einem Komparator mit dem momentanen Sollwert des Spulenstrombetrages verglichen. Diese Anordnung hat sich als schaltungstechnisch einfach und robust zu realisieren herausgestellt, insbesondere bei monolithischen Bausteinen. Einen wichtigen Beitrag bei dieser Art der Spulenstrom-Messwerterfassung liefert auch die an die Applikation angepasste Blanking-Zeit, innerhalb derer kein Messwert genommen wird. Diese Zeit wird nach jedem Wechsel einer Chopper-Phase (ON, FD, SD) abgewartet, damit Stromschwankungen aufgrund von parasitären Spulenkapazitäten und anderen Effekte abklingen können und ein Messverstärker auf einen hinreichend genauen Wert einschwingen kann.

Um die Verlustleistung in dem Messwiderstand Rs zu minimieren, muss dieser möglichst klein sein. Es hat sich allerdings gezeigt, dass die Messung des daraus resultierenden geringen Spannungsabfalls, zumal wenn dieser im Bereich des Nulldurchgangs des Spulenstroms gemessen wird, relativ ungenau ist und fehlerbehaftet sein kann, da ein Komparator üblicherweise einen Offset aufweist. Auch der Innenwiderstand der Motorspulen sowie deren Induktivität streuen exemplar- und temperaturabhängig, so dass eine ungeregelte Kompensation des Offsets oftmals nicht genau genug möglich ist.

Das oben erläuterte Chopper-Grundprinzip hat im Ergebnis somit Ungenauigkeiten hinsichtlich einer zeitlich möglichst optimalen Beendigung der FD-Phasen und damit die eingangs erläuterten Abweichungen des tatsächlichen Spulenstroms von einem vorgegebenen Soll-Spulenstrom insbesondere im Bereich des Nulldurchgangs des tatsächlichen Spulenstroms zur Folge.

Da im Bereich des Nulldurchgangs des Stroms durch eine Spule nur diese Spule den Drehwinkel des Motors bestimmt (in der jeweils anderen Spule ist im Mikroschrittbetrieb zu diesem Zeitpunkt der Scheitelpunkt des Spulenstroms erreicht), reagiert der Motor insgesamt sehr empfindlich auf Sprünge oder Abflachungen des Spulenstroms während des Nulldurchgangs und zeigt, wie oben erwähnt wurde, ein höheres Laufgeräusch sowie Resonanzen und schlechtere Positionierungseigenschaften.

Erfindungsgemäß wird somit ein Verfahren und eine Schaltungsanordnung geschaffen, mit dem/der ein Motor mit einem Spulenstrom betrieben wird, der zumindest im Nulldurchgang des Spulenstroms wesentlich genauer einem Soll-Spulenstrom folgt, und mit dem eine gute Symmetrie der Sinusform des Spulenstroms bezüglich des Nulldurchgangs des Spulenstroms erzielt wird.

Ein Merkmal der Erfindung besteht darin, dass anstelle der bekannten FD-Phase eine umgekehrte ON-Phase, im Folgenden als ONr-Phase bezeichnet, geschaffen wird, die zwar wie eine FD-Phase zum Abbau des Spulenstrom-Betrages dient, deren Dauer jedoch in ähnlicher Weise wie es oben für die ON-Phasen beschrieben wurde, in Abhängigkeit von einer Abweichung eines momentanen tatsächlichen Wertes des Spulenstroms von einem momentanen Sollwert des Spulenstroms geregelt wird. Die ONr-Phase wird dabei so lange aufrecht erhalten bzw. erst dann beendet, bis/wenn der momentane Zielstromwert erreicht ist.

Aus Gründen, die weiter unten noch erläutert werden, entspricht der Zielstromwert, auf den der tatsächliche Spulenstrom während der ONr-Phase geregelt wird (im Folgenden "unterer" Zielstromwert genannt), jedoch vorzugsweise nicht genau dem momentanen Sollwert des vorgegebenen Spulenstroms (also z.B. dem Momentanwert des vorgegebenen sinusförmigen Stromverlaufes), sondern er ist hinsichtlich seines Betrages kleiner als dieser.

Vorzugsweise wird auch während der ON-Phase der tatsächliche Spulenstrom auf einen Zielstromwert (im Folgenden "oberer" Zielstromwert genannt) geregelt, der hinsichtlich seines Betrages größer ist, als der momentane Sollwert des Spulenstroms.

Diese beiden Beträge (nachfolgend auch "Hysterese" genannt) könnten unterschiedlich groß sein, sie sind jedoch vorzugsweise zumindest im Wesentlichen gleich groß, so dass der untere und der obere Zielstromwert jeweils um den gleichen Betrag von dem momentanen Sollwert des Spulenstroms nach unten bzw. nach oben abweichen.

Der gesamte Verlauf des tatsächlichen Spulenstroms wird somit abwechselnd zwischen jeweils einem oberen und einem unteren Zielstromwert geregelt, so dass sich der tatsächliche Spulenstrom innerhalb eines Fensters oder Schlauches bewegt, das/der durch die oberen und unteren Zielstromwerte begrenzt ist. Der daraus resultierende mittlere tatsächliche Spulenstromverlauf weicht dabei nicht oder nur geringfügig von dem vorgegebenen Soll-Spulenstromverlauf (also z.B. der Sinusform) ab. Auf diese Weise können inbesondere eventuelle Abflachungen oder Sprünge im Bereich des Nulldurchgangs des Spulenstroms vermieden werden.

Mit anderen Worten wird also das genannte Fenster (Schlauch) so gelegt, dass sich ein mittlerer tatsächliche Spulenstromverlauf (der innerhalb des Fensters liegt) ergibt, der nicht oder nur geringfügig von dem vorgegebenen Soll-Spulenstromverlauf abweicht.

Dabei wird zur Stabilisierung des Timings bzw. zur Begrenzung der Chopperfrequenz nach oben vorzugsweise zwischen jeweils einer ON-Phase (auch erste Phase genannt) und einer darauf folgenden ONr-Phase (auch zweite Phase genannt) sowie vorzugsweise auch zwischen jeweils einer ONr-Phase und einer darauf folgenden ON-Phase jeweils eine SD-Phase mit zu diesem Zweck geeignet (d. h. insbesondere applikationsabhängig) bemessener Dauer eingefügt.

Die SD-Phasen haben dabei vorzugsweise eine vorbestimmte konstante zeitliche Dauer, die zur Begrenzung der Chopper-Zyklusfrequenz insbesondere nach oben oder auch nach unten geeignet voreingestellt ist. Die Dauer kann jedoch auch während des Chopper-Verfahrens in Abhängigkeit von bestimmten Betriebszuständen oder zur Veränderung der genannten Frequenzbegrenzung verlängert und/oder verkürzt werden.

Als Chopperfrequenz (oder Chopper-Zyklusfrequenz) wird in dieser Anmeldung die Wiederholfrequenz der Chopperzyklen bezeichnet, die jeweils durch eine Abfolge der Phasen ON-SD-ONr-SD (nachfolgend Chopperzyklus genannt) gebildet sind (insbesondere bei konstantem oberen und unteren Zielstromwert). Mit dieser Chopper-Zyklusfrequenz ändert sich somit der Spulenstrom zyklisch zwischen dem oberen und dem unteren Zielstromwert. Diese Frequenz soll im Allgemeinen außerhalb des hörbaren Bereichs (>20kHz) liegen, damit sie akustisch nicht hörbar ist, andererseits soll sie aber auch nicht zu weit oberhalb dieses Bereiches liegen, um Ummagnetisierungsverluste im Motor und Schaltverluste in der Motor-Treiberschaltung zu minimieren.

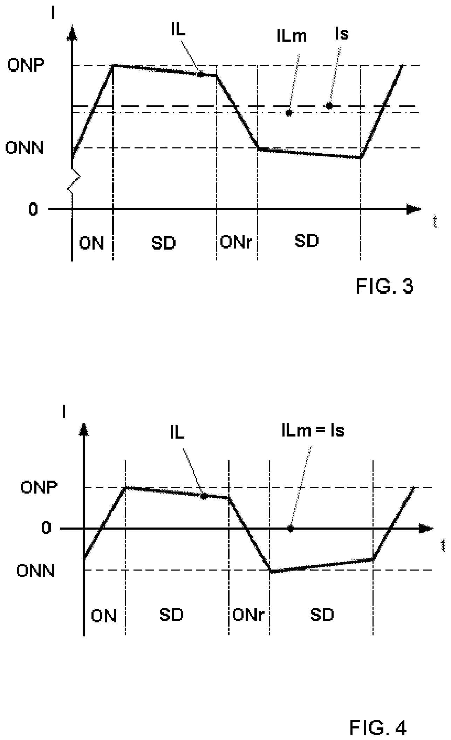

Figur 3 zeigt für einen kurzen zeitlichen Ausschnitt aus einer Spulenstromperiode den sich durch die obige Abfolge der Phasen ON-SD-ONr-SD ergebenden tatsächlichen Spulenstrom IL. Dabei wird während der ON-Phase der tatsächliche Spulenstrom IL auf einen oberen Zielstromwert ONP geregelt und fällt während der dann folgenden SD-Phase betragsmäßig geringfügig ab. Mit Beginn der ONr-Phase wird der tatsächliche Spulenstrom IL anschließend auf einen unteren Zielstromwert ONN geregelt und fällt dann während der folgenden SD-Phase betragsmäßig noch weiter geringfügig ab. Schließlich ist in Figur 3 auch der sich während dieses Chopperzyklusses ergebende mittlere tatsächliche Spulenstrom ILm im Vergleich zu dem vorgegebenen Soll-Spulenstrom Is angedeutet.

Figur 4 zeigt diese Stromverläufe für einen kurzen zeitlichen Ausschnitt aus einer Spulenstromperiode im Bereich von deren Strom-Nulldurchgang. Aus dieser Darstellung wird deutlich, dass die Stromverläufe während eines Chopperzyklusses (ON-SD-ONr-SD) im Bereich des Nulldurchgangs vollständig symmetrisch liegen, so dass der mittlere tatsächliche Spulenstrom ILm in diesem Bereich genau dem vorgegebenen Soll-Spulenstrom Is entspricht.

Die Erfassung des tatsächlichen Spulenstroms IL erfolgt wiederum vorzugsweise mittels eines Messwiderstandes Rs im Fußpunkt der Brückenschaltung, über die der Spulenstrom IL durch die betreffende Motorspule geführt wird (oder auch auf andere bekannte Weise), sowie eines Komparators zum Vergleichen des tatsächlichen Spulenstroms IL mit dem jeweiligen oberen und unteren Zielstromwert ONP, ONN.

Da ein solcher Komparator somit bidirektional arbeitet, hat ein Offset des Komparators lediglich eine Asymmetrie zwischen dem positiven und dem negativen Scheitelwert der tatsächlichen Spulenstromperiode, nicht hingegen einen Sprung oder eine Abflachung des Spulenstroms im Bereich von dessen Nulldurchgang zur Folge. Aufgrund der Umpolung des Komparators zwischen einer ON- und einer ONr-Phase während jedes Chopperzyklusses kann eine eventuelle Asymmetrie sogar im Bereich eines Chopperzyklusses ausgeglichen werden.

Die oberen und unteren Zielstromwerte ONP, ONN werden vorzugsweise dadurch erzeugt, dass die zugeführten momentanen Sollwerte des Spulenstroms Is jeweils um den ersten bzw. zweiten Betrag (die vorzugsweise wie oben erläutert gleich groß sind) erhöht bzw. vermindert werden, bevor sie einem Komparator zum Vergleichen mit dem erfassten momentanen tatsächlichen Spulenstromwert zugeführt werden.

Alternativ oder zusätzlich dazu können die oberen und unteren Zielstromwerte ONP, ONN jeweils auch durch Beschaltung des Komparators in der Weise erzeugt werden, dass dieser eine entsprechende Hysterese beim Vergleich der o.g. Stromwerte aufweist.

In beiden Fällen werden die ersten und zweiten Beträge (nachfolgend einheitlich "Hysterese" bezeichnet) zumindest so groß gewählt, dass Ungenauigkeiten des Komparators und Totzeiten bei der Erfassung der Spulenstrom-Werte (Blanking des Komparators) nicht zu einer ungenauen Nachführung des tatsächlichen Spulenstroms gegenüber dem Soll-Spulenstrom und damit zu Instabilitäten der Regelung führen. Dies bedeutet, dass die Hysterese mindestens einen bestimmten Minimalwert haben muss, der so groß ist, dass innerhalb der Blankzeit des Komparators (wenige Mikrosekunden, die benötigt werden um nach einem Wechsel einer Chopperphase den Spulenstromwert wieder korrekt erfassen zu können) keinesfalls der obere bzw. untere Zielstromwert erreicht wird.

Die Chopper-Zyklusfrequenz ergibt sich aus der (vorzugsweise fest vorgewählten und somit konstanten) Dauer der SD-Phasen zuzüglich der Dauer der ON- und der ONr-Phase, welche aus der Spuleninduktivität, der Stromhysterese sowie der Versorgungsspannung (abzüglich der Gegen-EMK und der ohm'schen Verluste R*I) resultieren.

Wenn allerdings z.B. die Versorgungspannung U der Schaltung nur geringfügig oberhalb bzw. unterhalb der zur Regelung des Spulenstroms IL auf die oberen bzw. unteren Zielstromwerte mindestens notwendigen Spannung liegt und somit die ON-Phasen bzw. die ONr-Phasen relativ lang werden müssen, bis der Spulenstrom IL die vorgegebenen oberen bzw. unteren Zielstromwerte erreicht hat, so besteht die Gefahr, dass die Chopperzyklen (ON-SD-ONr-SD) insgesamt relativ lang werden und damit die Chopper-Zyklusfrequenz so weit absinkt, dass diese in den hörbaren Bereich gelangt. Darüber hinaus kann diese Frequenz auch bei einer hohen Motorinduktivität entsprechend absinken.

Ein solches Absinken kann vermindert oder beseitigt werden, indem die oben genannten ersten und zweiten Beträge (Hysterese) möglichst niedrig gewählt werden und somit die Zielstromwerte nur geringfügig über bzw. unter den Soll-Spulenstromwerten Is liegen.

Um sicherzustellen, dass die Chopper-Zyklusfrequenz stets oberhalb des hörbaren Bereiches bleibt, müsste allerdings eine sehr kleine Hysterese gewählt bzw. eingestellt werden. Dies kann jedoch wiederum zu der oben erläuterten Gefahr einer zu losen Nachführung des tatsächlichen Spulenstroms führen. Darüber hinaus würde eine sehr geringe Hysterese hohe Anforderungen an die Genauigkeit und die Geschwindigkeit sowie die Symmetrie des Komparators zwischen negativen und positiven Messwerten stellen und Bauelemente mit sehr geringen Toleranzen erfordern, was mit entsprechenden Kostennachteilen verbunden wäre.

Wenn somit kein optimaler Wert für die Hysterese gefunden werden kann, mit dem beide o.g. Probleme zufriedenstellend gelöst werden können, so wird vorzugsweise eine variable Hysterese eingeführt, und zwar für zumindest eine der beiden Chopper-Phasen ON und ONr. Wenn die variable Hysterese nur für eine der beiden Chopper-Phasen realisiert wird, kann die andere der beiden Chopper-Phasen eine wie oben beschrieben feste, d.h. konstante Hysterese haben. Ferner kann in dem Fall, in dem nur die ON-Phase mit der variablen Hysterese realisiert wird, die ONr-Phase ggf. eine bekannte FD-Phase sein. Die Auswahl dieser Varianten und die Bemessung der Hysterese erfolgt in Abhängigkeit von dem Anwendungsfall in der Weise, dass die oben genannten Anforderungen erfüllt werden bzw. eine möglichst gute Symmetrie des Verlaufes des tatsächlichen Spulenstroms IL in Relation zu dem Soll-Spulenstrom Is erreicht wird.

Zusätzlich oder alternativ dazu könnten zur Erreichung dieser Ziele zwar prinzipiell auch die SD-Phasen eingestellt bzw. zeitlich verkürzt werden. Da die SD-Phasen jedoch wie oben erwähnt wurde bevorzugt dazu dienen, die Chopper-Zyklusfrequenz nach oben hin zu begrenzen und somit zu diesem Zweck eine bestimmte konstante zeitliche Mindestlänge aufweisen müssen, wird von einer Verkürzung der SD-Phasen nach Möglichkeit nicht Gebrauch gemacht.

Zur Realisierung der variablen Hysterese wird zu Beginn jeder ON-Phase und/oder ONr-Phase zunächst ein relativ hoher Wert der Hysterese, der die oben zuletzt genannten Probleme einer zu geringen Hysterese (lose Nachführung des tatsächlichen Spulenstroms etc.) nicht entstehen lässt, als vorgegebener Anfangswert festgelegt. Um zu verhindern, dass unter den oben genannten oder anderen Bedingungen die zeitliche Dauer der ON-Phase bzw. der ONr-Phase zu lang und damit die Frequenz der Chopperzyklen in bestimmtem Maße absinkt oder einen bestimmten Wert unterschreitet oder hörbar wird, wird die Hysterese von Beginn an jedes Chopperzyklusses (d.h. jeweils während jeder ON- und/oder jeder ONr-Phasen eines jeden Chopperzyklusses) von ihrem Anfangswert bis maximal auf einen vorgegebenen unteren Wert (Endwert) vermindert, der auch bei null oder nahe null liegen kann.

Wenn dabei der vorgegebene untere Wert der Hysterese erreicht ist, bleibt diese konstant, bis die ON- bzw. ONr-Phase beendet ist. Umgekehrt wird die ON- bzw. ONr-Phase natürlich beendet, wenn der tatsächliche Spulenstromwert den (Hysterese-abhängigen) Zielstromwert erreicht hat, auch wenn zu diesem Zeitpunkt die Hysterese ihren unteren Wert (der den zweiten Zielstromwerten entspricht, s.u.) noch nicht erreicht hat.

Mit anderen Worten bedeutet dies, dass während jedes gleichen Chopperzyklusses während jeder ON-Phase der obere Zielstromwert ONP an den momentanen Sollwert des Spulenstroms Is und/oder während jeder ONr-Phase der untere Zielstromwert ONN an den momentanen Sollwert des Spulenstroms Is angenähert wird, um zu gewährleisten, dass die jeweilige Chopper-Phase und damit auch der betreffende Chopperzyklus innerhalb einer tolerierbaren maximalen Dauer beendet und diese Dauer nicht überschritten wird, weil zum Beispiel die Versorgungsspannung gerade relativ niedrig ist. Somit wird auch verhindert, dass die Chopper-Zyklusfrequenz nicht zu stark abfällt bzw. einen gewünschten unteren Werte nicht unterschreitet. Zu diesem Zweck kann die Geschwindigkeit und/oder der Betrag der Annäherung geeignet gewählt werden.

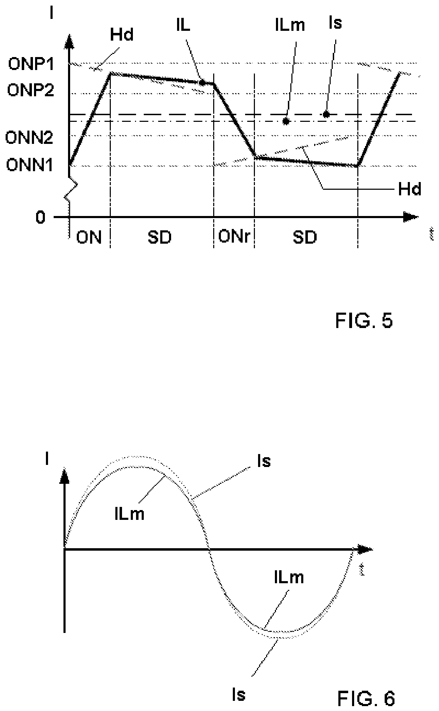

Figur 5 zeigt für einen Chopperzyklus die sich dabei ergebenden Stromverläufe und Zielstromwerte für eine ON- und eine ONr-Phase. Der vorgegebene (hohe) Anfangswert der Hysterese entspricht einem ersten oberen bzw. einem ersten unteren Zielstromwert ONP1, ONN1, deren betragsmäßiger Abstand von dem momentanen Wert des vorgegebenen Soll-Spulenstromes vorzugsweise gleich ist. Der vorgegebene maximale untere Wert oder Endwert der Hysterese entspricht einem zweiten oberen bzw. einem zweiten unteren Zielstromwert ONP2, ONN2, die jeweils einen geringeren Abstand von dem momentanen Sollwert des Spulenstroms Is haben, als der erste obere bzw. der erste untere Zielstromwert ONP1, ONN1, wobei dieser Abstand ebenfalls betragsmäßig vorzugsweise gleich groß ist.

Ferner ist mit gestrichelten Linien Hd die aus der Absenkung des Hysterese resultierende Absenkung bzw. Erhöhung (d.h. Annäherung) des ersten oberen bzw. ersten unteren Zielstromwertes in Richtung auf den jeweils zweiten oberen bzw. den zweiten unteren Zielstromwert angedeutet, wobei diese Absenkung bzw. Erhöhung während jedes einzelnen Chopperzyklusses erfolgt und sich mit jedem Chopperzyklus wiederholt. Die Steilheit bzw. Geschwindigkeit der Absenkung bzw. Erhöhung (die vorzugsweise betragsmäßig gleich sind) kann durch Einstellung der Häufigkeit und/oder der Höhe der vorzugsweise in diskreten Stufen erfolgenden Dekrementierung der Hysterese vorgenommen werden. Alternativ dazu ist auch ein analoger, kontinuierlicher Ansatz für die Verminderung der Hysterese denkbar.

Das Absenken bzw. Ansteigen der ersten Zielstromwerte ONP1, ONN1 in Richtung auf die zweiten Zielstromwerte ONP2 bzw. ONN2 und damit in Richtung auf den momentanen Wert des vorgegebenen Soll-Spulenstromes hat also zur Folge, dass die Zielstromwerte dem jeweiligen tatsächlichen Spulenstrom IL entgegenkommen und damit verhindert wird, dass die ON- bzw. die ONr-Phase zu lang wird, weil aufgrund bestimmter Betriebsbedingungen (niedrige Versorgungsspannung etc.) der tatsächlichen Spulenstrom IL nur langsam ansteigt. Damit wird einem Absinken der Chopper-Zyklusfrequenz in einen hörbaren Bereich entgegen gewirkt. Gleichzeitig besteht aufgrund der variablen Hysterese auch nicht die Gefahr, dass die zweiten Zielstromwerte ONP2 und ONN2 bereits während der Komparator-Blanking-Zeit erreicht werden und somit der Strom zu lose nachgeführt wird.

In diesem Zusammenhang sei noch erwähnt, dass die Annäherung der ersten Zielstromwerte an den momentanen Wert des vorgegebenen Soll-Spulenstromes aus Gründen der einfachen Realisierung zumindest im Wesentlichen zeitlich linear erfolgt, auch wenn natürlich auch eine nichtlineare Annäherung möglich wäre.

Schließlich ist auch in Figur 5 der sich aus dem tatsächlichen Spulenstromverlauf IL ergebende mittlere Spulenstrom ILm angedeutet, der in diesem Fall (d.h. für momentane Sollwerte des Spulenstroms, die nicht im Bereich von dessen Nulldurchgang liegen) wiederum geringfügig unter dem vorgegebenen Soll-Spulenstromverlauf Is liegt.

Im Bereich des Nulldurchgangs liegen wiederum analog zu Figur 4, insbesondere wenn die variable Hysterese für die ON- und die ONr-Phase realisiert wird, die Stromverläufe während eines Chopperzyklusses (ON-SD-ONr-SD) vollständig symmetrisch, so dass der mittlere tatsächliche Spulenstrom ILm in diesem Bereich genau dem vorgegebenen Soll-Spulenstrom Is entspricht.

Es sei erwähnt, dass sich die Absenkung bzw. Erhöhung der ersten Zielstromwerte ONP1, ONN1 in Richtung auf die zweiten Zielstromwerte ONP2, ONN2 grundsätzlich auch über mehrere aufeinander folgende Chopperzyklen (d.h. ON- bzw. ONr-Phasen) erstrecken kann, so dass also während einer ON- (bzw. ONr-) Phase die Hysterese konstant ist und diese erst in der nächsten ON- (bzw. ONR-) Phase vermindert wird, so dass die zweiten Zielstromwerte ONP2, ONN2 ggf. erst nach mehreren Chopperzyklen erreicht sind, bevor die Hysterese wieder auf ihren (hohen) Anfangswert zu Beginn der dann folgenden nächsten ON- bzw. ONr-Phase zurückgesetzt wird.

Der hohe Anfangswert und der niedrige Endwert der variablen Hysterese sowie die Geschwindigkeit der Absenkung wird dabei wiederum so gewählt, dass die oben genannten Probleme (lose Nachführung des tatsächlichen Spulenstroms etc., bzw. zu niedrige Frequenz der Chopperzyklen etc.) nicht auftreten.

Figur 6 zeigt den mit dem erfindungsgemäßen Verfahren erzielbaren mittleren Spulenstromverlauf ILm über eine gesamte Spulenstromperiode im Vergleich zu einem vorgegebenen sinusförmigen Soll-Spulenstromverlauf Is. Aus dieser Figur wird deutlich, dass beide im Bereich des Nulldurchgangs im wesentlichen keine Abweichung voneinander und insbesondere auch keine Asymmetrie aufweisen und nur in den Scheitelbereichen leichte Skalierungsabweichungen auftreten.

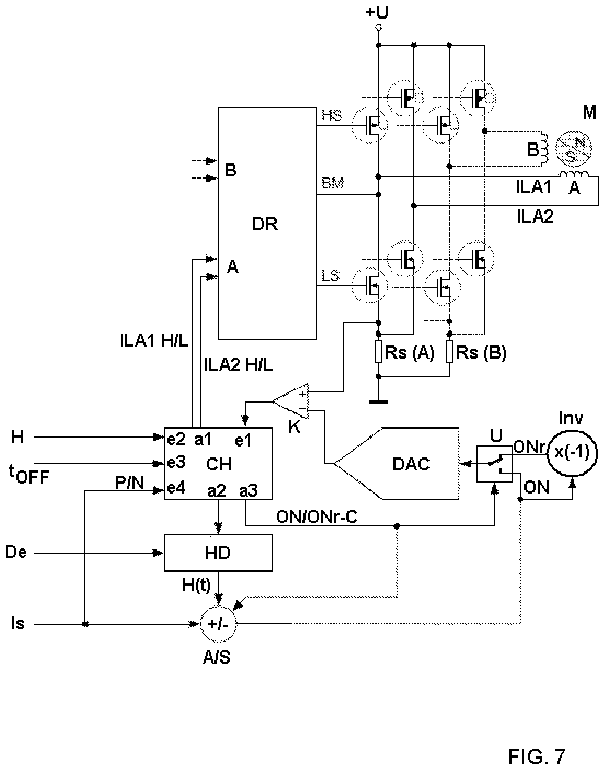

Figur 7 zeigt schließlich ein Blockschaltbild einer Schaltungsanordnung zur Durchführung des erfindungsgemäßen Verfahrens. Diese Schaltungsanordnung umfasst als an sich bekannte Komponenten eine Motor-Treiberschaltung DR, mit der über Ausgänge HS (High Side), LS (Low Side) und BM (Brückenmittelpunkt) jeweils eine der beiden Brückenschaltungen angesteuert wird, mit der jeweils eine der beiden Spulen A; B des in diesem Falle 2-Phasen-Motors M mit Strom versorgt wird. Das erfindungsgemäße Verfahren ist jedoch in entsprechender Weise auch bei einem 3- oder Mehrphasen-Motor mit einer entsprechend höheren Anzahl von Motorspulen anwendbar, in die jeweils mit einem erfindungsgemäßen Chopper-Verfahren die Spulenströme wie oben erläutert eingeprägt werden.

Die im Folgenden beschriebenen erfindungsgemäßen Komponenten der Schaltungsanordnung, mit der die Treiberschaltung DR über Eingänge A angesteuert wird, sind nur für eine der beiden Spulen (nämlich Spule A) des Schrittmotors M gezeigt. Diese Komponenten sind somit noch einmal für die andere Motorspule B (und ggf. für jede weitere Motorspule) zu realisieren und mit entsprechenden Eingängen B etc. der Treiberschaltung DR zu verbinden.

Wie bereits oben erwähnt wurde, wird der tatsächliche, durch eine Spule A des Motors M fließende Strom IL vorzugsweise mittels eines Messwiderstandes Rs(A) im Fußpunkt der Brückenschaltungen erfasst, über die die betreffende Spule A mit Strom versorgt wird.

Die Motorspule A wird, wie oben erwähnt wurde, nur während der ON- und/oder der ONr-Phasen aktiv angesteuert, und zwar während der ON-Phase mit einem Strom ILA1 in Richtung der vorgegebenen (d.h. Soll-) Spulenstromrichtung und während der ONr-Phase mit einem Strom ILA2 in der dazu entgegengesetzten Richtung. Dies gilt, ebenso wie alle folgenden Erläuterungen, entsprechend zeitversetzt auch für die andere Motorspule B.

Um die in den Figuren 3 bis 5 gezeigten Stromverläufe IL durch die Spule A zu treiben, werden der Treiberschaltung DR die durch einen Chopper CH für die beiden Richtungen der Spulenströme ILA1, ILA2 erzeugten PWM-Pulse ILA1 H/L, ILA2 H/L zugeführt.

Die entsprechend der Richtung der Spulenströme ILA1, ILA2 an dem Messwiderstand Rs(A) abfallende positive bzw. negative Spannung wird einem ersten Eingang eines Komparators K zugeführt, an dessen zweitem Eingang der Ausgang eines Digital/Analog-Wandlers DAC anliegt, mit dem die wie folgt beschrieben vorzugsweise in der digitalen Ebene erzeugten oberen und unteren Zielstromwerte in analoge Werte umgewandelt werden (die Zielstromwerte können auch durch analoge Signalverabeitung erzeugt werden, dann ist der Digital/Analog-Wandler DAC natürlich überflüssig). Der Chopper CH erzeugt dann an einem ersten Ausgang a1 in Abhängigkeit von dem Ausgangssignal des Komparators K die der Treiberschaltung DR zugeführten PWM-Pulse ILA1 H/L, ILA2 H/L in der Weise, dass der tatsächliche Spulenstromverlauf IL gemäß obiger Beschreibung erzielt wird.

Alternativ und analog zu der dargestellten Erfassung mittels eines Komparators K kann der Spulenstrom auch über einen ADC (Analog/Digital-Wandler) erfasst werden, um die Signalverarbeitung vollständig in der digitalen Ebene vorzunehmen.

Der Chopper CH weist neben einem ersten Eingang e1 für das Ausgangssignal des Komparators K einen zweiten Eingang e2 zur Einstellung des Anfangswertes der Hysterese H (und somit der ersten Zielstromwerte ONP1, ONN1), einen dritten Eingang e3 zur Einstellung einer t_{OFF}-Zeit des Choppers und einen vierten Eingang e4 für die vorgegebene momentane Richtung (Polarität) P/N des Soll-Spulenstroms Is durch die Spule A auf.

An einem zweiten Ausgang a2 des Choppers CH liegt ein Anfangswert (hoher Wert) der Hysterese H mit der erforderlichen Polarität an, während an einem dritten Ausgang a3 ein Schaltsignal ON/ONr-C zur Umschaltung zwischen der ON-Phase und der ONr-Phase abgegeben wird.

Die Schaltungsanordnung umfasst weiterhin eine Einrichtung zur Erzeugung der Zielstromwerte in Form eines Hysterese-Dekrementers HD zur Dekrementierung des Anfangswertes der Hysterese H (entsprechend den ersten Zielstromwerten), und zwar, wie oben erläutert, zum Zeitpunkt des Beginns einer jeden ON- (und/oder ONr-) Phase. Ein erster Eingang des Dekrementers HD ist zu diesem Zweck mit dem zweiten Ausgang a2 des Choppers CH verbunden. Über einen zweiten Eingang des Dekrementers HD kann die Geschwindigkeit und der Endwert des Hysterese-Dekrementes De zum Beispiel in Abhängigkeit von der Chopperzyklus-Frequenz eingestellt werden. Aus diesen Werten ergeben sich die Steigung der Hystereseänderung Hd und (siehe unten) die zweiten Zielstromwerte.

Die Schaltungsanordnung weist weiterhin einen Addierer/Subtrahierer A/S auf, mit dem ein zugeführter momentaner (digitaler) Sollwert des Spulenstrom Is mit der aktuellen (d.h. dekementierten) Hysterese H(t) beaufschlagt wird. Dabei wird in Abhängigkeit von dem Schaltsignal ON/ONr-C die momentane Hysterese H(t) zu dem Soll-Spulenstromwert addiert oder von diesem subtrahiert, so dass jeweils ein momentaner zweiter oberer bzw. unterer Zielstromwert, d.h. ein an den vorgegebenen Soll-Spulenstrom angenäherter Zielstromwert, für die ON- bzw. die ONr-Phase entsteht.

Diese momentanen zweiten oberen und unteren Zielstromwerte werden dann einem ersten Eingang eines Umschalters U sowie über einen Inverter Inv einem zweiten Eingang des Umschalters U zugeführt, an dessen Ausgang der Eingang des Digital/Analog-Wandlers DAC anliegt, um daraus die momentanen analogen oberen und unteren Zielstromwerte zu erzeugen, die dem zweiten Eingang des Komparators K zum Vergleich mit den gemessenen momentanen Spulenstromwerten IL zugeführt werden.

Der Umschalter U wird mittels des an dem dritten Ausgang a3 des Choppers CH anliegenden Schaltsignals ON/ONr-C entsprechend der aktuellen Phase zwischen der ON-Phase und der ONr-Phase umgeschaltet. Somit werden also während einer ONr-Phase die zugeführten Zielstromwerte gegenüber der ON-Phase invertiert, so dass die Polarität dieser Zielstromwerte der Polarität des aktuellen Stromsignals am Messwiderstand Rs(A) entspricht, welches ja - bedingt durch die hier dargestellte Art der Messung im Fußpunkt der Brückenschaltung - in der ONr-Phase im Vergleich zur ON-Phase ebenfalls invertiert ist.

Die Höhe H der Hysterese, d.h. deren Anfangswert (und damit der/die ersten Zielstromwerte) kann über den zweiten Eingang e2 des Choppers CH individuell durch den Anwender eingestellt werden. Dies betrifft auch die über den zweiten Eingang des Dekrementers HD einstellbare Geschwindigkeit, mit der der Anfangswert der Hysterese vermindert wird, bzw. den Endwert der Dekrementierung De (der dem/den zweiten Zielstromwerten entspricht). Andererseits ist es auch denkbar, diese Werte automatisch in Abhängigkeit von der momentanen Höhe der Chopperfrequenz, der Höhe der Versorgungsspannung, usw. so einzustellen, dass die oben genannten Probleme vermieden werden.

Die zweiten Zielstromwerte ONP2, ONN2, d.h. die minimal mögliche Hysterese, sind/ist vorzugsweise in jedem Chopperzyklus gleich. Dieser Endwert der Hysterese kann nahe oder bei dem Wert Null liegen, so dass die zweiten Zielstromwerte ONP2, ONN2 entsprechend nahe an dem Wert des vorgegebenen Soll-Spulenstromes liegen oder diesem gleich sein können.

Sofern auf die oben beschriebene Verminderung der Hysterese verzichtet werden kann, weil zum Beispiel die Hörbarkeit der Chopperfrequenz nicht von Belang ist, erfolgt keine Dekrementierung. Sie kann somit auch durch einen Anwender auf einen festen, d.h. sich nicht vermindernden Wert eingestellt werden, wenn dieser den Betriebsbedingungen bereits in gewünschtem Maße Rechnung trägt.

## Patentansprüche

1. Verfahren zur Regelung des Motorstroms bei einem elektrischen Motor, insbesondere einem Schrittmotor, mittels eines Chopper-Verfahrens, mit dem ein Spulenstrom (IL) durch mindestens eine der Motorspulen (A; B) während einer Chopper-Phase in Richtung auf einen ersten Zielstromwert (ONP1; ONN1) geregelt wird, der um einen vorbestimmten Betrag größer oder kleiner ist als ein momentaner Betrag eines vorgegebenen Soll-Spulenstromwertes (Is), wobei die Chopper-Phase beendet wird, wenn der Wert des Spulenstroms (IL) den ersten Zielstromwert (ONP1; ONN1) erreicht, und wobei der erste Zielstromwert (ONP1; ONN1) während der Chopper-Phase an den momentanen Wert des vorgegebenen Soll-Spulenstroms (Is) in der Weise angenähert wird, dass die Chopper-Phase vor Ablauf einer vorbestimmten maximalen Zeitdauer beendet wird, **dadurch gekennzeichnet, dass** die Chopper-Phase
- eine ON-Phase ist, während der der Spulenstrom (IL) in Richtung der Polarität des vorgegebenen Soll-Spulenstroms (Is) auf den ersten Zielstromwert (ONP1) geregelt wird, wobei der erste Zielstromwert (ONP1) ein erster oberer Zielstromwert (ONP1) ist, der um einen vorbestimmten ersten Betrag größer ist als der momentane Betrag des vorgegebenen Soll-Spulenstromwertes (Is), und/oder
- eine ONr-Phase ist, während der der Spulenstrom (IL) entgegen der Richtung der Polarität des vorgegebenen Soll-Spulenstroms (Is) auf den ersten Zielstromwert (ONN1) geregelt wird, wobei der erste Zielstromwert (ONN1) ein erster unterer Zielstromwert (ONN1) ist, der um einen vorbestimmten zweiten Betrag kleiner ist als der momentane Betrag des vorgegebenen Soll-Spulenstromwertes (Is), und dass
- die Geschwindigkeit und/oder der Betrag der Annäherung des ersten oberen bzw. des ersten unteren Zielstromwertes (ONP1; ONN1) an den momentanen Wert des vorgegebenen Soll-Spulenstroms (Is) so gewählt ist, dass eine Chopper-Zyklusfrequenz, mit der sich eine Abfolge der Chopper-Phasen zyklisch wiederholt, auch bei einer geringen Motor-Versorgungsspannung (U) und/oder einer hohen Motorinduktivität nicht unter einen vorbestimmten Wert absinkt, wobei ein Chopperzyklus mindestens eine ON-Phase und eine ONr-Phase beinhaltet.

2. Verfahren nach Anspruch 1,
bei dem der Spulenstrom (IL) abwechselnd durch die ON- und die ONr-Phase geregelt wird.

3. Verfahren nach Anspruch 1,
bei dem ein Chopperzyklus mindestens eine SD-Phase aufweist, die nach Beendigung einer Chopper-Phase aktiviert wird und während der die Motorspule kurzgeschlossen ist, wobei die SD-Phase entweder eine solche vorbestimmte konstante zeitliche Dauer hat, oder die Dauer in der Weise verändert wird, dass die Chopper-Zyklusfrequenz innerhalb eines vorbestimmten Bereiches liegt.

4. Verfahren nach Anspruch 1,
bei dem die Annäherung des ersten Zielstromwertes (ONP1; ONN1) an den momentanen Wert des vorgegebenen Soll-Spulenstroms (Is) zeitlich linear erfolgt.

5. Verfahren nach Anspruch 1,
bei dem der erste bzw. der zweite Betrag so groß gewählt wird, dass eine sichere Nachführung des tatsächlichen Spulenstroms (IL) gewährleistet ist und Instabilitäten der Regelung vermieden werden.

6. Verfahren nach Anspruch 1,
bei dem der erste und der zweite Betrag gleich groß ist.

7. Verfahren nach Anspruch 1,
bei dem die Annäherungen des ersten oberen und des ersten unteren Zielstromwertes (ONP1, ONN1) an den momentanen Wert des vorgegebenen Soll-Spulenstroms (Is) jeweils eine gleiche Geschwindigkeit und/oder jeweils einen gleichen Betrag aufweisen.

8. Verfahren nach Anspruch 1,
bei dem der erste Zielstromwert (ONP1; ONN1) dadurch erzeugt wird, dass zu oder von einem momentanen Wert des vorgegebenen Soll-Spulenstroms (Is) ein dem vorbestimmten Betrag entsprechender Strombetrag addiert bzw. subtrahiert wird.

9. Verfahren nach Anspruch 8,
bei dem der erste Zielstromwert (ONP1; ONN1) dadurch an den Wert des vorgegebenen Soll-Spulenstroms (Is) angenähert wird, dass der addierte bzw. subtrahierte Strombetrag während einer Chopper-Phase verkleinert wird.

10. Verfahren nach Anspruch 1,
bei dem eine maximale Annäherung des ersten Zielstromwertes (ONP1; ONN1) an den vorgegebenen Soll-Spulenstrom (Is) durch einen zweiten Zielstromwert (ONP2; ONN2) definiert ist, der nahe an dem vorgegebenen Soll-Spulenstrom (Is) liegt oder diesem gleich ist.

11. Schaltungsanordnung zur Regelung des Motorstroms bei einem elektrischen Motor, insbesondere einem Schrittmotor, nach einem Verfahren gemäß Anspruch 1, **gekennzeichnet durch**:
einen Chopper (CH) mit einem ersten Ausgang (a1) zur Ansteuerung einer Motor-Treiberschaltung (DR) in Abhängigkeit von einem Ausgangssignal eines Komparators (K), wobei der Komparator (K) zum Vergleichen eines momentanen oberen und unteren Zielstromwertes (ONP; ONN), der um eine momentane Hysterese (H(t)) größer bzw. kleiner ist als ein zugeführter momentaner Soll-Spulenstrom (Is), mit tatsächlichen Spulenstromwerten (IL) vorgesehen und ein Ausgang des Komparators (K) mit einem ersten Eingang (e1) des Choppers (CH) verbunden ist, sowie
eine Einrichtung (HD, A/S) zur Erzeugung der momentanen oberen und unteren Zielstromwerte (ONP; ONN), die einen Dekrementer (HD) zur Dekrementierung eines Anfangswertes der Hysterese (H) und zur Einstellung der Geschwindigkeit und des Endwertes der Dekrementierung aufweist, wobei während einer ON-Phase der obere Zielstromwert (ONP) an den momentanen Wert des vorgegebenen Soll-Spulenstroms (Is) und/oder während einer ONr-Phase der untere Zielstromwert (ONN) an den momentanen Wert des vorgegebenen Soll-Spulenstroms (Is) angenähert wird.

12. Schaltungsanordnung nach Anspruch 11,
bei der die Einrichtung (HD, A/S) zur Erzeugung der momentanen oberen und unteren Zielstromwerte (ONP; ONN) einen Addierer/Subtrahierer (A/S) zur Erhöhung bzw. Verminderung des momentanen Betrages von zugeführten Soll-Spulenstromwerten (Is) mit der dekrementierten Hysterese (H(t)) während jeder ON- und/oder ONr-Phase aufweist.

13. Schaltungsanordnung nach Anspruch 11,
bei der der Dekrementer (HD) einen ersten Eingang für den Anfangswert der Hysterese (H) sowie einen zweiten Eingang zur Einstellung der Geschwindigkeit und des Endwertes der Dekrementierung des Anfangswertes der Hysterese (H) aufweist.

14. Schaltungsanordnung nach Anspruch 13,
bei der der Chopper (CH) einen zweiten Eingang (e2) zur Einstellung des Anfangswertes der Hysterese (H) sowie einen zweiten Ausgang (a2) für den Anfangswert der Hysterese (H) aufweist, wobei der zweite Ausgang (a2) mit dem ersten Eingang des Dekrementers (HD) verbunden ist.

15. Schaltungsanordnung nach Anspruch 12,
bei der der Chopper (CH) einen dritten Ausgang (a3) aufweist, der mit dem Addierer/Subtrahierer (A/S) verbunden ist und an dem ein Schaltsignal (ON/ONr-C) zur Umschaltung zwischen der ON-Phase und der ONr-Phase anliegt, um in Abhängigkeit von dem Schaltsignal (ON/ONr-C) den momentanen Betrag des zugeführten Soll-Spulenstromwertes (Is) mit der dekrementierten Hysterese (H(t)) zu erhöhen bzw. zu vermindern.

16. Schaltungsanordnung nach Anspruch 11,
bei der die Einrichtung zur Erzeugung der Zielstromwerte (ONP; ONN) durch eine Beschaltung des Komparators (K) in der Weise gebildet ist, dass dieser eine entsprechende Hysterese (H(t)) beim Vergleichen der Zielstromwerte (ONP; ONN) mit den tatsächlichen Spulenstromwerten (Is) aufweist.

17. Schaltungsanordnung nach Anspruch 11,
bei der die Zielstromwerte (ONP; ONN) in der digitalen Ebene erzeugt und einem Digital/Analog-Wandler (DAC) zur Erzeugung analoger Eingangssignale für den Komparator (K) zugeführt werden.

## Claims

1. Method for controlling the motor current in an electric motor, in particular a stepper motor, by means of a chopper method, by which a coil current (IL) through at least one of the motor coils (A; B) is controlled during a chopper phase in the direction of a first target current value (ONP1; ONN1) which is greater or smaller than a momentary amount of a predetermined desired coil current value (Is) by a predetermined amount, wherein the chopper phase being terminated when the value of the coil current (IL) reaches the first target current value (ONP1; ONN1), and wherein the first target current value (ONP1; ONN1) is approximated during the chopper phase to the momentary value of the predetermined desired coil current (Is) in such a way, that the chopper phase is terminated before a predetermined maximum duration of time has elapsed, **characterized in that** the chopper phase
- is an ON phase during which the coil current (IL) is controlled to the first target current value (ONP1) in the direction of the polarity of the predetermined desired coil current (Is), wherein the first target current value (ONP1) is a first upper target current value (ONP1) which is greater by a predetermined first amount than the momentary amount of the predetermined desired coil current value (Is), and/or
- is an ONr phase during which the coil current (IL) is controlled to the first target current value (ONN1) against the direction of polarity of the predetermined desired coil current (Is), wherein the first target current value (ONN1) is a first lower target current value (ONN1) which is smaller by a predetermined second amount than the momentary amount of the predetermined desired coil current value (Is), and that
- the speed and/or the amount of the approximation of the first upper and the first lower target current value (ONP1; ONN1), respectively, to the momentary value of the predetermined desired coil current (Is) is selected such, that a chopper cycle frequency, at which a sequence of the chopper phases is cyclically repeated, does not drop below a predetermined value even at a low motor supply voltage (U) and/or a high motor inductance, wherein a chopper cycle comprises at least one ON phase and one ONr phase.

2. Method according to claim 1,
in which the coil current (IL) is alternately controlled by the ON phase and the ONr phase.

3. Method according to claim 1,
in which a chopper cycle comprises at least one SD phase, which is activated after termination of a chopper phase and during which the motor coil is short-circuited, wherein the SD phase either has such a predetermined constant time duration, or the duration is changed in such a way, that the chopper cycle frequency lies within a predetermined range.

4. Method according to claim 1,
in which the approximation of the first target current value (ONP1; ONN1) to the momentary value of the predetermined desired coil current (Is) is linear in time.

5. Method according to claim 1,
in which the first or the second amount is selected so large that reliable tracking of the actual coil current (IL) is ensured and control instabilities are avoided.

6. Method according to claim 1,
in which the first and second amounts are equal.

7. Method according to claim 1,
in which the approximations of the first upper and the first lower target current value (ONP1, ONN1) to the momentary value of the predetermined desired coil current (Is) each have a similar velocity and/or a similar amount.

8. Method according to claim 1,
in which the first target current value (ONP1; ONN1) is generated by adding or subtracting a current amount corresponding to the predetermined amount to or from a momentary value of the predetermined desired coil current (Is).

9. Method according to claim 8,
in which the first target current value (ONP1; ONN1) is approximated to the value of the predetermined desired coil current (Is) by reducing the added or subtracted current amount during a chopper phase.

10. Method according to claim 1,
in which a maximum approximation of the first target current value (ONP1; ONN1) to the predetermined desired coil current (Is) is defined by a second target current value (ONP2; ONN2), which is close to or similar to the predetermined desired coil current (Is).

11. Circuit arrangement for controlling the motor current of an electric motor, in particular a stepper motor, according to a method according to claim 1, **characterized by**:
a chopper (CH) having a first output (a1) for driving a motor driver circuit (DR) as a function of an output signal of a comparator (K), wherein the comparator (K) is provided for comparing a momentary upper and lower target current value (ONP; ONN) which is larger and smaller, respectively, by a momentary hysteresis (H(t)) than a supplied momentary desired coil current (Is), with actual coil current values (IL), and wherein an output of the comparator (K) is connected to a first input (e1) of the chopper (CH), and
a means (HD, A/S) for generating the momentary upper and lower target current values (ONP; ONN), which has a decrementer (HD) for decrementing an initial value of the hysteresis (H) and for setting the speed and the final value of the decrementing, wherein during an ON phase the upper target current value (ONP) is approximated to the momentary value of the predetermined desired coil current (Is) and/or during an ONr phase the lower target current value (ONN) is approximated to the momentary value of the predetermined desired coil current (Is).

12. Circuit arrangement according to claim 11,
in which the means (HD, A/S) for generating the momentary upper and lower target current values (ONP; ONN) comprises an adder/subtractor (A/S) for increasing and decreasing, respectively, the momentary amount of supplied desired coil current values (Is) by the decremented hysteresis (H(t)) during each ON and/or ONr phase.

13. Circuit arrangement according to claim 11,
in which the decrementer (HD) comprises a first input for the initial value of the hysteresis (H) and a second input for setting the speed and the final value of the decrementing of the initial value of the hysteresis (H).

14. Circuit arrangement according to claim 13,
in which the chopper (CH) comprises a second input (e2) for setting the initial value of the hysteresis (H) and a second output (a2) for the initial value of the hysteresis (H), wherein the second output (a2) being connected to the first input of the decrementer (HD).

15. Circuit arrangement according to claim 12,
in which the chopper (CH) comprises a third output (a3) which is connected to the adder/subtractor (A/S) and at which a switching signal (ON/ONr-C) is applied for switching between the ON phase and the ONr phase, in order to increase and decrease, respectively, the momentary amount of the supplied desired coil current value (Is) with the decremented hysteresis (H(t)), depending on the switching signal (ON/ONr-C).

16. Circuit arrangement according to claim 11,
in which the means for generating the target current values (ONP; ONN) is realized by providing a circuitry of the comparator (K) such that it has a corresponding hysteresis (H(t)) when comparing the target current values (ONP; ONN) with the actual coil current values (Is).

17. Circuit arrangement according to claim 11,
in which the target current values (ONP; ONN) are generated in the digital domain and are fed to a digital-to-analog converter (DAC) for generating analog input signals for the comparator (K).

## Revendications

1. Procédé de régulation du courant du moteur d'un moteur électrique, en particulier d'un moteur pas à pas, au moyen d'un procédé de chopper, dans lequel un courant de bobine (IL) à travers au moins l'une des bobines du moteur (A; B) est contrôlé commandé pendant une phase de chopper dans la direction d'une première valeur de courant cible (ONP1; ONN1) qui est supérieure ou inférieure à une quantité momentanée d'une valeur de courant de bobine désirée prédéterminée (Is) d'une quantité prédéterminée, dans lequel la phase de chopper est terminée lorsque la valeur du courant de bobine (IL) atteint la première valeur de courant cible (ONP1; ONN1), et dans lequel la première valeur de courant cible (ONP1; ONN1) est approchée pendant la phase de chopper à la valeur momentanée du courant de bobine désiré prédéterminé (Is) de telle sorte que la phase de chopper est terminée avant qu'une durée maximale prédéterminée de temps ne se soit écoulée, **caractérisé en ce que** la phase de chopper
- est une phase ON pendant laquelle le courant de bobine (IL) est contrôlé à la première valeur de courant cible (ONP1) dans la direction de la polarité du courant de bobine désiré prédéterminé (Is), dans laquelle la première valeur de courant cible (ONP1) est une première valeur de courant cible supérieure (ONP1) qui est supérieure d'une première quantité prédéterminée que la quantité momentanée de la valeur de courant de bobine désirée prédéterminée (Is), et/ou
- est une phase ONr pendant laquelle le courant de bobine (IL) est contrôlé à la première valeur de courant cible (ONN1) contre la direction de polarité du courant de bobine désiré prédéterminé (Is), dans laquelle la première valeur de courant cible (ONN1) est une première valeur de courant cible inférieure (ONN1) qui est plus petite d'une seconde quantité prédéterminée que la quantité momentanée de la valeur de courant de bobine désirée prédéterminée (Is), et que
- la vitesse et/ou la quantité de l'approximation de la première valeur de courant cible supérieure et de la première valeur de courant cible inférieure (ONP1; ONN1), respectivement, à la valeur momentanée du courant de bobine désiré prédéterminé (Is) est sélectionnée de telle sorte qu'une fréquence de cycle de chopper, à laquelle une séquence des phases de chopper est répétée cycliquement, ne tombe pas en dessous d'une valeur prédéterminée même à une tension d'alimentation moteur basse (U) et/ou une inductance moteur élevée, dans lequel un cycle de chopper comprend au moins une phase ON et une phase ONr.

2. Procédé selon la revendication 1,
dans laquelle le courant de bobine (IL) est alternativement contrôlé par la phase ON et la phase ONr.

3. Procédé selon la revendication 1,
dans laquelle un cycle de chopper comprend au moins une phase SD, qui est activée après la fin d'une phase de chopper et pendant laquelle la bobine du moteur est court-circuitée, dans laquelle la phase SD a soit une durée de temps constante prédéterminée, soit la durée est modifiée de telle sorte que la fréquence du cycle de chopper soit dans une plage prédéterminée.

4. Procédé selon la revendication 1,
dans laquelle l'approximation de la première valeur de courant cible (ONP1; ONN1) à la valeur momentanée du courant de bobine désiré prédéterminé (Is) est linéaire dans le temps.

5. Procédé selon la revendication 1,
dans laquelle la première ou la deuxième quantité est choisie si grande que le suivi fiable du courant réel de la bobine (IL) est assuré et que les instabilités de contrôle sont évitées.

6. Procédé selon la revendication 1,
dans laquelle les premier et deuxième quantité sont égaux.

7. Procédé selon la revendication 1,
dans laquelle les approximations de la première valeur de courant cible supérieure et de la première valeur de courant cible inférieure (ONP1, ONN1) à la valeur momentanée du courant de bobine désiré prédéterminé (Is) ont chacune une vitesse similaire et/ou une quantité similaire.

8. Procédé selon la revendication 1,
dans laquelle la première valeur de courant cible (ONP1; ONN1) est générée par addition ou soustraction d'une quantité de courant correspondant à la quantité prédéterminée à ou à partir d'une valeur momentanée du courant de bobine désiré prédéterminé (Is).

9. Procédé selon la revendication 8,
dans laquelle la première valeur de courant cible (ONP1; ONN1) est approchée de la valeur du courant de bobine désiré prédéterminé (Is) en réduisant la quantité de courant ajoutée ou soustraite pendant une phase de chopper.

10. Procédé selon la revendication 1,
dans laquelle une approximation maximale de la première valeur de courant cible (ONP1 ; ONN1) au courant de bobine désiré prédéterminé (Is) est définie par une seconde valeur de courant cible (ONP2; ONN2), qui est proche ou similaire au courant de bobine désiré prédéterminé (Is).

11. Circuit de régulation du courant moteur d'un moteur électrique, en particulier d'un moteur pas à pas, selon un procédé selon la revendication 1, **caractérisé par**:
un hacheur (CH) ayant une première sortie (a1) pour commander un circuit d'attaque de moteur (DR) en fonction d'un signal de sortie d'un comparateur (K), dans lequel le comparateur (K) est conçu pour comparer une valeur de courant cible supérieure et inférieure momentanée (ONP; ONN) qui est plus grand et plus petit, respectivement, par une hystérésis momentanée (H(t)) qu'un courant de bobine désirée momentanément fourni (Is), avec des valeurs réelles de courant de bobine (IL), et dans lequel une sortie du comparateur (K) est connectée à une première entrée (e1) du hacheur (CH), et
un moyen (HD, A/S) pour générer les valeurs de courant cible supérieure et inférieure momentanées (ONP; ONN), qui présente un décrémentateur (HD) pour dé-crémenter une valeur initiale de l'hystérésis (H) et pour régler la vitesse et la valeur finale du décrément, la valeur de courant cible supérieure (ONP) étant approchée pendant une phase ON à la valeur momentanée du courant de bobine désirée prédéterminé (Is) et/ou pendant une phase ONr, la valeur de courant cible inférieure (ONN) est approchée de la valeur momentanée du courant de bobine désirée prédéterminé (Is).

12. Circuit selon la revendication 11,
dans laquelle les moyens (HD, A/S) pour générer les valeurs de courant cible supérieure et inférieure momentanées (ONP; ONN) comprennent un additionneur/soustracteur (A/S) pour augmenter et diminuer, respectivement, la quantité momentanée de valeurs de courant de bobine désirées fournies (Is) par l'hystérésis diminuée (H(t)) pendant chaque phase ON et/ou ONr.

13. Circuit selon la revendication 11,
dans laquelle le décrémentateur (HD) comprend une première entrée pour la valeur initiale de l'hystérésis (H) et une seconde entrée pour régler la vitesse et la valeur finale de la décrément de la valeur initiale de l'hystérésis (H).

14. Circuit selon la revendication 13,
dans laquelle l'hacheur (CH) comprend une seconde entrée (e2) pour régler la valeur initiale de l'hystérésis (H) et une seconde sortie (a2) pour la valeur initiale de l'hystérésis (H), la seconde sortie (a2) étant connectée à la première entrée du décrémentateur (HD).

15. Circuit selon la revendication 12,
dans laquelle l'hacheur (CH) comprend une troisième sortie (a3) qui est connectée à l'additionneur/soustracteur (A/S) et à laquelle un signal de commutation (ON/ONr-C) est appliqué pour commuter entre la phase ON et la phase ONr-C, afin d'augmenter ou de diminuer, respectivement, la quantité momentanée de la valeur de courant de bobine désiré (Is) fournie avec l'hystérésis diminuée (H(t)), en fonction du signal de commutation (ON/ONr-C).

16. Circuit selon la revendication 11,
dans laquelle le moyen de génération des valeurs de courant cible (ONP; ONN) est réalisé en fournissant un circuit du comparateur (K) de telle sorte qu'il présente une hystérésis correspondante (H(t)) lors de la comparaison des valeurs de courant cible (ONP; ONN) avec les valeurs de courant de bobine réelles (Is).

17. Circuit selon la revendication 11,
dans laquelle les valeurs de courant cible (ONP; ONN) sont générées dans le domaine numérique et sont envoyées à un convertisseur numérique-analogique (DAC) pour générer des signaux d'entrée analogiques pour le comparateur (K).
